# NEW EUROPEAN PATENT SPECIFICATION

(11) **EP 1 426 480 B2**
(45) Date of publication and mention of the opposition decision: **27.03.2013**
(45) Mention of the grant of the patent: 23.09.2009
(21) Application number: 03009632.5
(22) Date of filing: 29.04.2003
(51) Int. Cl.: D06F 58/24, D06F 58/02, F28D 9/00

(54) **Clothes dryer and cooling passage structure for cooling condenser thereof**
Wäschetrockner und dazugehörige Kühlungskanalanordnung für Kühlungskondensator
Sèche-linge et passage de refroidissement pour condensateur correspondant

(30) Priority: 27.11.2002 KR 2002074390
(43) Date of publication of application: 09.06.2004
(73) Proprietor: LG Electronics, Inc., Seoul 150-010 (KR)
(72) Inventor: Park, Young Hwan, Seoul (KR); Chung, Choon Myun, Kwangmyong-shi, Kyonggi-do (KR); Choi, Mu Yong, Seoul (KR); Park, Dae Yun, Kwangmyong-shi, Kyonggi-do (KR); Hong, Kyung Seop, Yonsu-gu, Inchon-kwangyokshi (KR)
(74) Representative: Diehl & Partner GbR

(56) References cited:
- DE-A1- 3 148 573
- GB-A- 899 955
- GB-A- 2 097 519
- US-A- 2 742 708
- US-A- 2 752 694
- US-A- 3 032 887
- US-A- 3 218 730
- US-A- 3 220 229
- US-A- 4 489 507

## Description

The present invention relates to clothes dryer, which dries wet clothes (laundry) with a hot air in a drum thereof.

In general, clothes dryer is an apparatus for drying clothes by removing moist from wet clothes (laundry) with a blow of a hot air generated by a heater. The clothes dryer is largely classified into an exhausting-type clothes dryer and a condensing-type clothes dryer according to a method for processing humid air generated during drying the wet clothes. In the exhausting-type clothes dryer, the humid air generated during drying the wet clothes in a drum is exhausted to the outside of the clothes dryer. Meanwhile, in the condensing-type clothes dryer, moist of the humid air is condensed, and then is removed from the humid air. After that, a dry air removing the moist is flown into the inside of the drum, thereby re-circulating the dry air in the drum.

US 3,032,887 discloses a clothes dryer comprising an recirculating dryer air system and an air cooling and moisture condensing system. The cooling system comprises louvers or ports located in the rear wall, a cooling air blower, a cooling air duct, and a bank of condensers. Cooling air enters the dryer via the ports which are adjacent to the inlet of the cooling air blower and passes through the cooling blower. A cooling air duct directs air from the cooling blower outlet over a bank of condenser tubes. A direct connection between the outlet end of the cooling air duct and the tube bank does not exist, but they lie in juxtaposition. Egress of the cooling air from the dryer is provided through an opening in the front wall.

The related art condensing-type clothes dryer will be described with reference to the accompanying drawings.

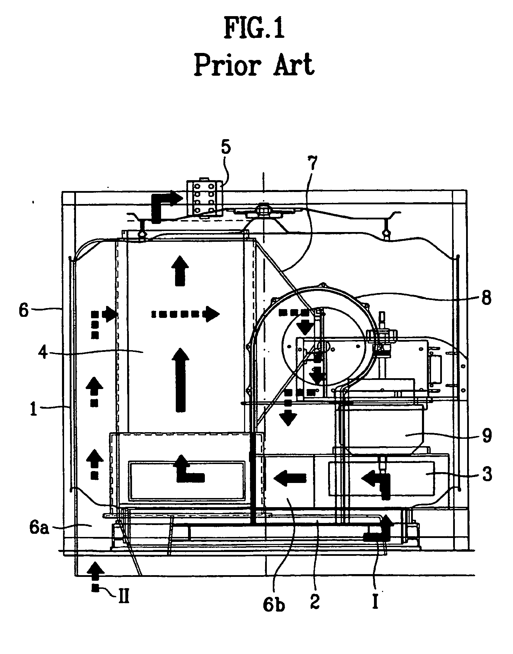

FIG. 1 is a plan view illustrating the related art condensing-type clothes dryer. In FIG. 1, an arrow I indicates a flow of a circulation air, and an arrow II indicates a flow of an external air.

Referring to FIG. 1, the related art condensing-type clothes dryer is provided with a cabinet 6, a drum 1, a circulation duct 6b, a filter 2, a circulation fan 3, a condenser 4, a cooling fan 8, a heater 5, and a motor 9. At this time, the cabinet 6 forms an external surface of the clothes dryer, and the cylindrical drum 1 for being rotatably provided in the cabinet 6 receives wet clothes (objects for drying) therein. For this, the drum 1 is connected to the motor 9 by a belt (not shown). The circulation duct 6b connects front and rear sides of the drum 1 with each other, for forming a passage of the circulation air of drying the wet clothes in the drum 1. The filter 2 filters out lint from the circulation air after drying the wet clothes. The circulation fan 3 forcibly circulates the circulation air through the circulation duct 6b by inhaling and blowing out the circulation air after passing through the filter 2. The condenser 4 connected to the middle portion of the circulation duct 6b removes moist from the humid circulation air by making a heat-exchange with a cool external air. For this, the cooling fan 8 is provided to be adjacent to the condenser 4 so as to inhale the external air passing through the condenser 4 in an axis direction, and to blow out the external air in a circumference direction toward the inside of the cabinet 6. In order to inflow the cool external air into the inside of the clothes dryer, one inhalation hole 6a is provided at the cabinet. Meanwhile, the heater 5 heats the dry circulation air from which the moist is removed in the condenser 4, and at least one heater 9 is provided for driving the drum 1, the circulation fan 3 and the cooling fan 8.

The operation of the related art drying-machine for clothes will be described as follows.

When a user puts the wet clothes in the drum 1, and operates the clothes dryer, the hot circulation air heated by the heater 5 is provided to the inside of the drum 1, thereby drying the wet clothes by removing the moist from the wet clothes. In this drying process step, the lint is removed from the circulation air during passing through the filter 2, and the filtered circulation air is blown into the condenser 4 by the circulation fan 3. The cool external air flown into the inside of the clothes dryer by the inhalation hole 6a passes through the condenser 4 by the cooling fan 8. At this time, the cool external air makes the heat-exchange with the high temperature and humid circulation air flowing in the inside of the condenser 4. After that, the external air completing the heat-exchange with the circulation air is discharged to the outside of the clothes dryer. The circulation air completing the heat exchange with the cool external air becomes dry. The dry circulation air is heated by the heater 5, and then is re-provided to the drum 1 for drying the wet clothes.

In the related art condensing-type clothes dryer, the cool external air for cooling the condenser 4 is flown to the inside of the clothes dryer through the one inhalation hole 6a provided at the cabinet of the clothes dryer, thereby increasing flow resistance of the circulation air. Also, when the external air passing through the condenser 4 is discharged, the external air is discharged from a discharging portion to an inlet side of the cooling fan 8 inhaling the external air at a right angle, thereby increasing the flow resistance of the external air discharged after passing through the condenser 4. Thus, it is hard to provide the external air enough for cooling the condenser 4, thereby decreasing the heat-exchange efficiency.

In the related art drying-machine for clothes, the external air is discharged to an internal front side of the clothes dryer through the cooling fan 8. However, there are many components in the internal front side of the clothes dryer, so that the external air discharged from the cooling fan 8 strikes on the components, thereby generating great circulation noise.

Accordingly, the present invention is directed to a clothes dryer that substantially obviates one or more problems due to limitations and disadvantages of the related art.

An object of the present invention is to provide to a clothes dryer, in which a flow resistance of an external air introduced to the inside of the clothes dryer decreases.

Another object of the present invention is to provide a clothes dryer, which can improve condensing efficiency of a condenser by providing an external air enough for cooling the condenser, and drying efficiency of the clothes dryer.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

The above object is solved by the combination of features of claim 1. Preferred embodiments are defined in the dependent claims.

The guide duct is provided such that an outlet side of the condenser exhausting the external air is connected to an inlet side of the cooling fan inhaling the external air after passing through the condenser.

The outlet side of the condenser exhausting the external air after passing through the condenser is opposite to the inlet side of the cooling fan inhaling the external air.

The cooling fan is composed of a sirocco fan, which is provided such that the external air passing through the cooling fan is discharged to the rear side of the cabinet.

The cooling fan is composed of a cross-flow fan, which is provided such that the external air passing through the cooling fan is discharged to the lateral side of the cabinet.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a plan view illustrating a related art clothes dryer;
FIG. 2 is a plan view illustrating a clothes dryer according to the first embodiment of the present invention; and
FIG. 3 is a plan view illustrating a clothes dryer according to the second embodiment of the present invention.

Reference will now be made in detail to the preferred embodiments of the present invention, examples of which are illustrated in the accompanying drawings. Wherever possible, the same reference numbers will be used throughout the drawings to refer to the same or like parts.

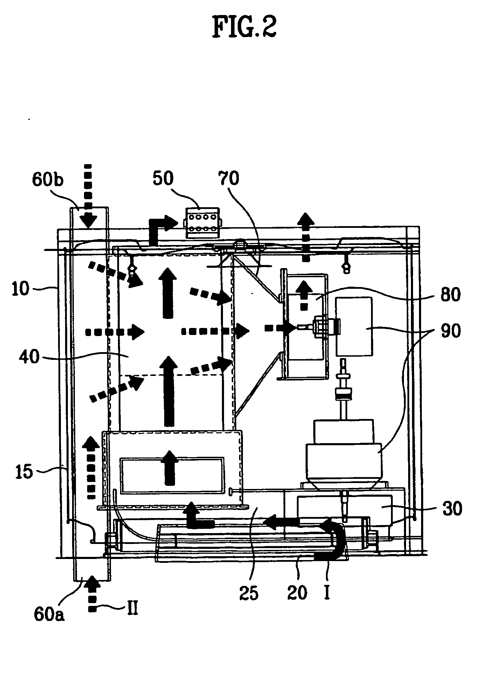

A clothes dryer according to the present invention will be described with reference to the accompanying drawings. FIG. 2 is a plan view illustrating a clothes dryer according to the first embodiment of the present invention. In FIG. 2, an arrow I indicates a passage of a circulation air, and an arrow II indicates a passage of an external air.

Referring to FIG. 2, the clothes dryer according to the present invention is provided with a cabinet 10, a drum 15, a circulation duct 25, a condenser 40, a cooling fan 80, a circulation fan 30, a heater 50, a filter 20, at least two inhalation-holes 60a and 60b, and a motor 90.

The cabinet 10 forms an external surface of the clothes dryer, and at least two inhalation-holes 60a and 60b are provided at the cabinet 10. For example, as shown in FIG. 2, front and rear inhalation holes 60a and 60b are respectively provided at front and rear sides of the cabinet 10.

The cylindrical drum 15 having a plurality of tumbling ribs (not shown) therein is rotatably provided inside the cabinet 10. At this time, the tumbling ribs are provided for lifting and dropping the wet clothes (objects for drying) received in the drum 15 during a rotation of the drum 15. The drum 15 is connected to the motor 90 by a belt.

The circulation duct 25 connects front and rear sides of the drum 15, for forming a flow passage of a circulation air of drying the wet clothes. Thus, the circulation air after drying the wet clothes in the drum 15 is circulated through the circulation duct 25, and then is re-flown into the inside of the drum 15.

The condenser 40 is provided at the middle portion of the circulation duct 25, so that the circulation air flowing in the circulation duct 25 passes through the condenser 40. Thus, the moist is removed from the high temperature and humid air generated during drying the wet clothes in the drum 15 by condensing the moist.

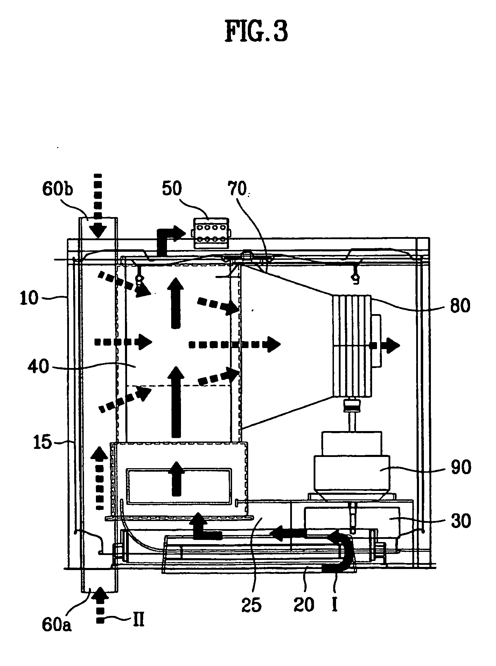

The cooling fan 80 is provided to be adjacent to the condenser 40 for inhaling and blowing the cool external air through the inhalation holes 60a and 60b provided at the cabinet 10. At this time, the external air flown into the cabinet 10 through the inhalation holes 60a and 60b sequentially passes through the condenser 40 and the cooling fan 80, and then is discharged to the outside of the cabinet 10. As shown in FIG. 2, if the cooling fan 80 is composed of a sirocco fan, the cooling fan 80 is provided such that the external air passing through the cooling fan 80 is discharged to the rear side of the cabinet 10. As shown in FIG. 3, if the cooling fan 80 is composed of a cross-flow fan, the cooling fan 80 is provided such that the external air passing through the cooling fan 80 is discharged to the lateral side of the cabinet 10. Meanwhile, in the clothes dryer according to the present invention, an outlet side of the condenser 40 exhausting the external air, after passing through the condenser 40, is opposite to an inlet side of the cooling fan 80 inhaling the external air.

A guide duct 70 is provided to connect the condenser 40 to the cooling fan 80, for forming the flow passage of the external air flown through the front and rear inhalation holes 60a and 60b. At this time, the guide duct 70 connects the outlet side of the condenser 40 exhausting the external air to the inlet side of the cooling fan 80 inhaling the external air after passing through the condenser 40.

The circulation fan 30 is provided in the circulation duct 25 for forcibly circulating the circulation air. The heater 50 heats the circulation air, and the filter 20 removes the lint from the circulation air. At least one motor 90 is provided for driving the drum 15, the circulation fan 30, and the cooling fan 80. As shown in FIG. 2, if the cooling fan 80 is composed of the sirocco fan, two motors are provided so as to drive the drum 15, the circulation fan 30, and the cooling fan 80. Meanwhile, as shown in FIG. 3, if the cooling fan 80 is composed of the cross-flow fan, one motor 90 is provided, thereby driving the drum 15, the circulation fan 30, and the cooling fan 80.

In the operation of the clothes dryer according to the present invention, since process steps for drying the wet clothes in the drum 15, removing the moist from the humid air in the condenser 40, and heating the dry air from which the moist is removed are same as those of the related art clothes dryer, an explanation for the process steps will be omitted. Thus, the operation of the clothes dryer according to the present invention will be described with an emphasis on the flow passage of the external air for cooling the condenser 40.

If the cooling fan 80 is rotated on driving of the clothes dryer, the cool external air is flown into the inside of the cabinet 10 through the front and rear inhalation holes 60a and 60b provided at the cabinet 10 in a great amount, as shown in FIG. 2 and FIG. 3. The external air flown into the inside of the cabinet 10 passes through the condenser 40, and makes the heat-exchange with the circulation air flowing in the inside of the condenser 40. Then, the circulation air completing the heat-exchange on flowing inside the condenser 40 is flown into the cooling fan 80 by the guide duct 70, and then is discharged to the outside of the cabinet 10. At this time, as shown in FIG. 2, if the cooling fan 80 is composed of the sirocco fan, the external air is discharged to the rear side of the cabinet 10. Meanwhile, if the cooling fan 80 is composed of the cross-flow fan, as shown in FIG. 3, the external air is discharged to the lateral side of the cabinet 10.

In the clothes dryer according to the present invention, the external air for cooling the condenser 40 is flown into the inside of the cabinet 10 through the front and rear inhalation holes 60a and 60b, thereby decreasing the flow resistance of the external air flown into the cabinet 10. Accordingly, a static pressure of the cooling fan 80 decreases, so that greater amount of the external air is provided to the condenser 40.

Also, the outlet side of the condenser 40 exhausting the external air is provided to be opposite to the inlet side of the cooling fan 80 inhaling the external air, thereby decreasing the flow resistance of the external air.

Accordingly, the humid circulation air flowing inside the condenser 40 makes the enough heat-exchange with the cool external air, so that it is possible to improve not only heat-exchange efficiency of the condenser but also drying efficiency of the clothes dryer.

After completing the heat-exchange in the condenser 40, the external air is discharged to the rear side or the lateral side of the cabinet 10 where the components are scarcely disposed, so that it is possible to minimize the external air discharged from the cooling fan 8 striking on the components, thereby decreasing the circulation noise of the external air discharged to the outside of the cabinet 10.

The condensing-type clothes dryer according to the present invention has the following advantages.

First, the clothes dryer according to the present invention has the two inhalation holes, so that it is possible to inhale the greater external air through the two inhalation holes, thereby improving the heat-exchange efficiency of the condenser, and the drying efficiency of the clothes dryer.

Also, the circulation noise of the external air discharged from the cooling fan decreases.

It will be apparent to those skilled in the art that various modifications and variations can be made in the present invention. Thus, it is intended that the present invention covers the modifications and variations of this invention provided they come within the scope of the appended claims.

Summarized, a clothes dryer and a cooling passage structure for cooling a condenser thereof is disclosed, which includes front and rear inhalation holes provided at a cabinet of the clothes dryer; and a guide duct provided to connect a condenser to a cooling fan, for forming a flow passage of an external air flown through the front and rear inhalation holes. At this time, the guide duct is provided such that an outlet side of the condenser exhausting the external air is connected to an inlet side of the cooling fan inhaling the external air after passing through the condenser. The outlet side of the condenser exhausting the external air after passing through the condenser is opposite to the inlet side of the cooling fan inhaling the external air. Also, if the cooling fan is composed of a sirocco fan, which is provided such that the external air passing through the cooling fan is discharged to the rear side of the cabinet. If the cooling fan is composed of a cross-flow fan, which is provided such that the external air passing through the cooling fan is discharged to the lateral side of the cabinet.

## Claims

1. A clothes dryer comprising:
a cabinet (10);
a drum (15) for placing laundry therein;
a circulation duct (25) connecting front and rear sides of the drum (15) for forming an air circulation passage;
a heater (50) for heating a circulation air circulating through the drum (15) and the circulation duct (25);
a condenser (40) ;
a circulation fan (30) for circulating the circulation air;
a cooling fan (80); and
a cooling passage structure for cooling the condenser (40) of the clothes dryer, the cooling passage structure comprising:
a rear inhalation hole (60b) provided at a rear side of the cabinet (10) of the clothes dryer; and
a guide duct (70) provided to connect the condenser (40) to the cooling fan (80);
**characterized in that**
the cooling passage structure further comprises
a front inhalation hole (60a) provided at a front side of the cabinet (10) of the clothes dryer
and
the guide duct (70) is provided for forming a. flow passage of an external air of the cabinet (10) flown through the front and rear inhalation holes (60a,60b).

2. The clothes dryer according to claim 1, wherein the guide duct (70) is provided such that an outlet side of the condenser (40) exhausting the external air is connected to an inlet side of the cooling fan (80) inhaling the external air after passing through the condenser (40).

3. The clothes dryer according to claim 1 or 2, wherein the outlet side of the condenser (40) exhausting the external air after passing through the condenser (40) is opposite to the inlet side of the cooling fan (80) inhaling the external air.

4. The clothes dryer according to one of claims 1 to 3, wherein the cooling fan (80) is composed of a sirocco fan, which is provided such that the external air passing through the cooling fan (80) is discharged to the rear side of the cabinet (10).

5. The clothes dryer according to one of claims 1 to 3, wherein the cooling fan (80) is composed of a cross-flow fan, which is provided such that the external air passing through the cooling fan (80) is discharged to the lateral side of the cabinet (10).

6. The clothes dryer according to one of claims 1 to 5 further comprising
at least one driving motor (90) driving the drum (15), the circulation fan (30), and the cooling fan (80) ;
wherin the condenser (40) is connected to the middle portion of the circulating duct (25).

## Patentansprüche

1. Wäschetrockner, umfassend:
ein Gehäuse (10);
eine Trommel (15) zum Anordnen von Wäsche darin;
eine Umwälzleitung (25), welche die vordere und die hintere Seite der Trommel (15) verbindet, um einen Luftumwälzkanal zu bilden;
eine Heizung (50) zum Erwärmen einer Umwälzluft,
welche durch die Trommel (15) und die Umwälzleitung (25) zirkuliert;
einen Kondensator (40);
ein Umwälzgebläse (30) zum Umwälzen der Umwälzluft;
ein Kühlgebläse (80); und
einen Kühlkanalaufbau zum Kühlen des Kondensators (40) des Wäschetrockners, wobei der Kühlkanalaufbau umfasst:
ein hintere Ansaugöffnung (60b), welche an der Hinterseite des Gehäuses (10) des Wäschetrockners bereitgestellt ist; und
eine Führungsleitung (70), welche zum Verbinden des Kondensators (40) mit dem Kühlgebläse (80) vorgesehen ist;
**dadurch gekennzeichnet, dass**
der Kühlkanalaufbau des Weiteren umfasst eine vordere Ansaugöffnung (60a), welche an einer Vorderseite des Gehäuses (10) des Wäschetrockners bereitgestellt ist
und
die Führungsleitung (70) zum Bilden eines Strömungsdurchlasses einer externen Luft des Gehäuses (10) bereitgestellt ist, welche durch die vordere und die hintere Ansaugöffnung (60a, 60b) strömt.

2. Wäschetrockner gemäß Anspruch 1, wobei die Führungsleitung (70) derart bereitgestellt ist, dass eine Auslassseite des Kondensators (40), welche die externe Luft ausstößt, mit einer Einlassseite des Kühlgebläses (80) verbunden ist, welche die externe Luft nach Durchlaufen des Kondensators (40) ansaugt.

3. Wäschetrockner gemäß Anspruch 1 oder 2, wobei die Auslassseite des Kondensators (40), welche die externe Luft nach Durchlaufen des Kondensators (40) ausstößt, gegenüber der Einlassseite des Kühlgebläses (80) liegt, welches die externe Luft ansaugt.

4. Wäschetrockner gemäß einem der Ansprüche 1 bis 3, wobei das Kühlgebläse (80) aus einem Schirokko-Gebläse zusammengesetzt ist, welches derart bereitgestellt ist, dass die externe Luft, die durch das Kühlgebläse (80) geht, zur Hinterseite des Gehäuses (10) ausgegeben wird.

5. Wäschetrockner gemäß einem der Ansprüche 1 bis 3, wobei das Kühlgebläse (80) aus einem Querstromgebläse zusammengesetzt ist, welches derart bereitgestellt ist, dass die externe Luft, die durch das Kühlgebläse (80) geht, zur lateralen Seite des Gehäuses (10) ausgegeben wird.

6. Wäschetrockner gemäß einem der Ansprüche 1 bis 5, des Weiteren umfassend
wenigstens einen Antriebsmotor (90), welcher die Trommel (15), das Umwälzgebläse (30) und das Kühlgebläse (80) antreibt;
wobei der Kondensator (40) mit dem mittleren Abschnitt der Umwälzleitung (25) verbunden ist.

## Revendications

1. Séchoir pour vêtements, comprenant :
une armoire (10) ;
un tambour (15) pour placer le linge dans celui-ci ;
une conduite de circulation (25) connectant des faces avant et arrière du tambour (15) pour former un passage de circulation d'air;
un réchauffeur (50) pour chauffer de l'air de circulation circulant au travers du tambour (15) et de la conduite de circulation (25) ;
un condenseur (40) ;
un ventilateur de circulation (30) pour faire circuler l'air de circulation ;
un ventilateur de refroidissement (80) ; et
une structure de passages de refroidissement pour refroidir le condenseur (40) du séchoir pour vêtements, la structure de passages de refroidissement comprenant :
un orifice arrière d'inhalation (60b) ménagé au niveau d'une face arrière de l'armoire (10) du séchoir pour vêtements ; et
une conduite de guidage (70) agencée pour connecter le condenseur (40) au ventilateur de refroidissement (80) ;
**caractérisé en ce que**
la structure de passages de refroidissement comprend en outre un orifice avant d'inhalation (60a) ménagé au niveau d'une face avant de l'armoire (10) du séchoir pour vêtements
et
la conduite de guidage (70) étant agencée pour former un passage d'écoulement d'un air externe à l'armoire (10) passant au travers des orifices avant et arrière d'inhalation (60a, 60b).

2. Séchoir pour vêtements selon la revendication 1, dans lequel la conduite de guidage (70) est agencée de telle sorte qu'une face de sortie du condenseur (40) par laquelle s'échappe l'air externe est connectée à une face d'entrée du ventilateur de refroidissement (80) inhalant de l'air externe après passage au travers du condenseur (40).

3. Séchoir pour vêtements selon la revendication 1 ou 2, dans lequel la face de sortie du condenseur (40), par laquelle s'échappe l'air externe après passage au travers du condenseur (40), est opposée à la face d'entrée du ventilateur de refroidissement (80) inhalant de l'air externe.

4. Séchoir pour vêtements selon l'une des revendications 1 à 3, dans lequel le ventilateur de refroidissement (80) est composé d'un ventilateur sirocco, qui est agencé de telle sorte que l'air externe passant au travers du ventilateur de refroidissement (80) est déchargé vers la face arrière de l'armoire (10).

5. Séchoir pour vêtements selon l'une des revendications 1 à 3, dans lequel le ventilateur de refroidissement (80) est composé d'un ventilateur à écoulement transversal, qui est agencé de telle sorte que l'air externe passant au travers du ventilateur de refroidissement (80) est déchargé vers la face latérale de l'armoire (10).

6. Séchoir pour vêtements selon l'une des revendications 1 à 5, comprenant en outre au moins un moteur d'entraînement (90) entraînant le tambour (15), le ventilateur de circulation (30) et le ventilateur de refroidissement (80) ;
dans lequel le condenseur (40) est connecté à la portion médiane de la conduite de circulation (25).
